# NEUE EUROPÄISCHE PATENTSCHRIFT

(11) **EP 3 279 685 B2**
(45) Veröffentlichungstag und Bekanntmachung des Hinweises auf die Entscheidung über den Einspruch: **18.08.2021**
(45) Hinweis auf die Patenterteilung: 28.11.2018
(21) Anmeldenummer: 17179135.3
(22) Anmeldetag: 30.06.2017
(51) Int. Cl.: G01S 7/486

(54) **OPTOELEKTRONISCHER SENSOR UND VERFAHREN ZUR ERFASSUNG EINES OBJEKTS**
OPTOELECTRONIC SENSOR AND METHOD FOR DETECTING AN OBJECT
CAPTEUR OPTOÉLECTRONIQUE ET PROCÉDÉ DE DÉTECTION D'UN OBJET

(30) Priorität: 04.08.2016 DE 102016114432
(43) Veröffentlichungstag der Anmeldung: 07.02.2018
(73) Patentinhaber: SICK AG, 79183 Waldkirch (DE)
(72) Erfinder: Eble, Johannes, 79183 Waldkirch (DE); Zwölfer, Ulrich, 79183 Waldkirch (DE)

(56) Entgegenhaltungen:
- EP-A1- 2 629 050
- EP-A1- 2 629 050
- EP-A1- 2 708 914
- EP-A1- 2 708 914
- WO-A1-2012/085149
- WO-A1-2012/085151
- WO-A1-2012/085152
- DE-A1-102010 038 186
- DE-A1-102010 038 186

## Beschreibung

Die Erfindung betrifft einen optoelektronischen Sensor und ein Verfahren zur Erfassung eines Objekts in einem Überwachungsbereich nach dem Oberbegriff von Anspruch 1 beziehungsweise 8.

Optoelektronische Sensoren gibt es in einem breiten Spektrum, das von eindimensionalen Lichtschranken und Lichttastern über Laserscanner bis zu Kameras reicht. Über die reine Objekterfassung hinaus wird in entfernungsmessenden Systemen auch eine Distanz zu dem Objekt bestimmt. Distanzsensoren nach dem Lichtlaufzeitprinzip messen dazu die Laufzeit eines Lichtsignals, die über die Lichtgeschwindigkeit der Entfernung entspricht. Man unterscheidet herkömmlich die pulsbasierte und die phasenbasierte Messung. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Die Grenze zwischen den beiden Verfahren lässt sich aber nicht immer scharf ziehen, denn etwa bei komplexen Pulsmustern wird ein Pulslaufzeitverfahren einem Phasenverfahren ähnlicher als einer klassischen Einzelpulsmessung.

Um auch geringe Empfangsintensitäten nachweisen zu können, werden herkömmlich in manchen optoelektronischen Sensoren Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist als bei einer einfachen PIN-Diode.

Eine noch größere Empfindlichkeit wird mit Lawinenphotodioden erreicht, die im sogenannten Geiger-Modus betrieben werden (SPAD, Single Photon Avalanche Diode). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching).

Eine SPAD zählt somit wie ein Geigerzähler Einzelereignisse. SPADs sind nicht nur hochempfindlich, sondern auch vergleichsweise kostengünstig und effizient in Silizium-Halbleitern zu integrieren. Weiter lassen sie sich dann mit wenig Aufwand auf einer Leiterkarte integrieren. Eine Besonderheit ist die Tatsache, dass auch ein minimales Stör-ereignis, wie ein Fremdlichtphoton oder Dunkelrauschen, das gleiche maximale Empfangssignal erzeugt wie ein Nutzlichtsignal. Um diesen Auswirkungen zu begegnen, werden in der Praxis mehrere SPADs gemeinsam ausgewertet.

Es gibt Matrixanordnungen von SPADs, die nicht nur ein Summensignal bereitstellen, sondern ähnlich wie bei einem pixelaufgelösten Bildsensor im Prinzip das Auslesen einzelner SPADs gefolgt von einer direkten Quantisierung ermöglichen. Das wird hier als digitale SPAD-Matrix bezeichnet und erlaubt, die Information von Teilbereichen oder Untergruppen zu erfassen.

Die Verwendung eines derartigen schnellen und hochempfindlichen Empfangselements, bei dem die Information einzelner Pixel verarbeitet werden kann, erfordert an sich neuartige Optikkonzepte, mit denen sich die Leistungsfähigkeit des Gesamtsystems optimieren lässt. Herkömmlich werden aber nur Systeme eingesetzt, deren Sendelicht unter Verwendung von Sende- und Empfangslinsen mit sphärischen oder asphärischen Oberflächen runde Lichtflecke in der Empfängerebene erzeugt, wobei der Lichtfleck zudem eine inhomogene Bestrahlungsstärke aufweist.

Die EP 2 708 914 A1 offenbart einen Sensor zum Erfassen einer Tiefenkarte. Ein Sendelichtstrahl tastet eine Szene mit Hilfe einer Ablenkeinheit basierend auf MEMS-Spiegeln ab. Eine SPAD-Pixel-Matrix aktiviert dazu jeweils den Teilbereich, der mit der jeweiligen Abtastrichtung korrespondiert.

Die EP 2 629 050 A1 beschreibt einen Triangulationslichttaster mit einer segmentierten Empfangsoptik, die dafür sorgt, dass der Empfangslichtfleck langgestreckt ist und dadurch wenigstens drei nebeneinanderliegende Empfängerelemente trifft.

Aus der DE 10 2010 038 186 A1 ist bekannt, in einem optoelektronischen Sensor einen Lichtsender einzusetzen, der eine Linienanordnung mehrerer Laser- oder LED-Einzelemitter aufweist. Dadurch entsteht auf dem Lichtempfänger eine entsprechende Linienanordnung und damit effektiv ein langgestreckter Lichtfleck hoher Leistungsdichte. Der Sensor ist ein hintergrundausblendender Lichttaster, und der schmale Lichtfleck hoher Leistungsdichte verbessert dessen Auflösung.

Es ist daher Aufgabe der Erfindung, die Leistungsfähigkeit eines optoelektronischen Sensors mit einer digitalen SPAD-Matrix zu verbessern.

Die Aufgabe wird durch einen optoelektronischen Sensor und ein Verfahren zur Erfassung eines Objekts in einem Überwachungsbereich nach Anspruch 1 beziehungsweise 8 gelöst. Der Sensor weist einen Lichtsender zum Aussenden eines Lichtsignals sowie als Lichtempfänger eine Vielzahl von im Geiger-Modus betriebenen Lawinenphotodioden oder SPADs auf, die vorzugsweise als Pixel zu einer Zeile oder Matrix angeordnet sind. Dabei besteht die Möglichkeit wie in einer digitalen SPAD-Matrix, einzelne Lawinenphotodiodenelemente oder Gruppen davon gezielt zu aktivieren oder zu deaktivieren. Nur die aktivierten Lawinenphotodiodenelemente tragen tatsächlich zu einer Messung bei. Die Aktivierung kann tatsächlich einzelne Pixel schalten, so dass es in den nicht aktivierten Pixeln gar nicht zum Lawinendurchbruch kommt, ebenso kann aber auch auf das Auslesen nicht aktivierter Pixel verzichtet oder deren Information in der Auswertung nicht berücksichtigt werden. Eine Auswertungseinheit des Sensors aktiviert diejenigen Pixel, die von dem Lichtfleck getroffen werden, den das aus dem Überwachungsbereich zurückkehrende Lichtsignal auf dem Lichtempfänger erzeugt, und deaktiviert vorzugsweise die übrigen Pixel. Diese Auswahl kann beispielsweise durch einen geeigneten Algorithmus vorhergesagt, parametriert, eingelernt oder anhand einer Messung nachgeführt sein. Die Erfindung geht nun von dem Grundgedanken aus, die Geometrie des Lichtflecks anzupassen, insbesondere durch einen langgestreckten Lichtfleck in der Empfängerebene. Dazu wird für einen entsprechenden langgestreckten Querschnitt des Lichtsignals gesorgt, das am Lichtempfänger ankommt.

Die Erfindung hat den Vorteil, dass der längliche Lichtfleck an die spezifischen Anforderungen einer SPAD-Matrix und typische Anwendungen des Sensors angepasst ist. Das verhindert Fehldetektionen beispielsweise von zusätzlichen Lichtreflexen oder Beugungsmustern, ist elektronisch und damit viel einfacher realisierbar als eine schmale mechanische Blende. Durch Anpassung von Lichtfleck und aktiviertem Bereich kann dort die Bestrahlungsstärke, damit die Signalstärke und letztlich die Reichweite erhöht werden. Indem gezielt Lawinenphotodiodenelemente berücksichtigt werden, die Nutzlicht empfangen, ergibt sich ein viel besseres Signal/Rausch-Verhältnis. Die Unempfindlichkeit gegen Fremdlicht wird weiter gesteigert, weil der Sichtbereich sehr schmal eingestellt werden kann. Insgesamt erhöht sich die Leistungsfähigkeit des Sensors im Hinblick auf Reichweite, Ansprechzeit, Fremdlichtverträglichkeit und punktgenaues Schalten senkrecht zur Strahlachse deutlich.

Der Lichtfleck weist bevorzugt ein Seitenverhältnis von mindestens 2:1 auf, möglicherweise auch 3:1 oder mehr. Geht man von einer SPAD-Matrix mit gleicher Pixelgeometrie in horizontaler und vertikaler Richtung aus, so überdeckt der Lichtfleck in seiner Längsrichtung mindestens doppelt so viele Pixel wie in Querrichtung. Dabei sind in Querrichtung vorzugsweise nur ein, zwei oder jedenfalls sehr wenige Pixel vorgesehen. Der Lichtfleck ist vorteilhafterweise mit seiner Längsrichtung in Spalten- oder Zeilenrichtung der SPAD-Matrix orientiert, kann aber prinzipiell auch diagonal dazu verdreht sein.

Der Lichtfleck weist bevorzugt eine rechteckige Form auf. Dies ermöglicht die beste Anpassung an die SPAD- oder Pixelstruktur des Lichtempfängers. Dennoch sind andere Geometrien wie beispielsweise eine Ellipse denkbar, die möglicherweise optisch leichter erreichbar sind.

Der Sensor ist bevorzugt ein entfernungsmessender Sensor, bei dem die Steuer- und Auswertungseinheit dafür ausgebildet ist, aus einer Lichtlaufzeit zwischen Aussenden des Lichtsignals und Empfangen des an dem Objekt remittierten oder reflektierten Lichtsignals einen Abstand des Objekts zu bestimmen. Bei der Entfernungsmessung ist die hohe Empfindlichkeit eines Lichtempfängers mit Lawinenphotodiodenelementen im Geiger-Modus besonders vorteilhaft. Die Erfindung sorgt für eine verbesserte Ausnutzung der hohen Empfindlichkeit. Die Lichtlaufzeit kann beispielsweise durch TDCs (Time-to-Digital Converter) gemessen werden. TDCs können direkt monolithisch in einem Kristall des Lichtempfängers integriert werden. Durch Verknüpfung von Lawinenphotodiodenelement und TDC kann ein Auftreffort und eine Zeitinformationen der einfallenden Photonen gewonnen werden. Dabei ist in einigen Ausführungsformen ein TDC je Pixel vorgesehen, vorzugsweise ist aber die Verknüpfung eines TDC zu einem Pixel oder einer Gruppe von Pixeln einstellbar, so dass weniger Schaltungselemente benötigt werden und die Chipfläche minimiert wird. Die Zuordnung von TDCs ist eine Möglichkeit, Lawinenphotodiodenelemente zu aktivieren, da ein Lawinenphotodiodenelement ohne eine solche Zuordnung zur Laufzeitmessung nicht beiträgt.

Das ausgesandte Lichtsignal weist bevorzugt einen Lichtpuls auf. Der Sensor misst also Entfernungen nach dem Pulsverfahren. Dabei sind auch kompliziertere Formen wie Doppelpulse oder sogar Pulscodes denkbar. Es können auch mehrere Lichtpulse nacheinander ausgesandt, empfangen und die jeweiligen Einzelergebnisse gemeinsam statistisch ausgewertet werden, etwa in einem Pulsmittelungsverfahren. Alternativ ist ein Phasenverfahren denkbar.

Der Lichtempfänger weist bevorzugt eine Empfangsoptik auf, welche die langgestreckte Form des Lichtflecks erzeugt. Durch Anpassungen der Empfangsoptik kann der Lichtfleck weiter optimiert werden. Einen langgestreckten Lichtfleck erzeugt auch eine Linienanordnung mehrerer Lichtquellen beziehungsweise eine entsprechende Sendeoptik, so dass dies alternativ oder zusätzlich zu einer Empfangsoptik für die Erzeugung der langgestreckten Form verwendet werden kann.

Vorzugsweise homogenisiert die Empfangsoptik den Lichtfleck. Dadurch werden Fehler, insbesondere Laufzeitfehler, durch Intensitätsschwankungen vermieden. Die konstante Bestrahlungsstärke innerhalb des Lichtflecks führt zu einer besseren Ausnutzung der einzelnen Lawinenphotodiodenelemente und damit einem höheren Signal. Damit erhöht sich die Reichweite, und durch effizientere Statistik verbessert sich die zu erwartende Ansprechzeit, bis ein Messwert verfügbar ist. Die Totzeit der Lawinenphotodiodenelemente wirkt sich wegen der verringerten Intensitätsschwankungen nicht so stark aus, es werden insgesamt mehr Nutzlichtphotonen erkannt als bei inhomogenem Lichtfleck. Auch die Varianz in der Ankunftszeit des ersten Signalphotons verringert sich, und deshalb wird bei einer Lichtlaufzeitmessung der Objektabstand genauer bestimmt. Eine Sendeoptik kann die Homogenisierung unterstützen oder anstelle der Empfangsoptik leisten.

Die Empfangsoptik weist mindestens eine Freiformfläche auf. Dabei kann die Freiformfläche auf einer Linse oder einem Spiegel realisiert sein. Freiform bedeutet, dass die Geometrie sich nicht als Asphäre oder deren Rotationskörper beschreiben lässt, und das erlaubt eine genaue Anpassung des Lichtflecks. Die Linse oder der Spiegel mit der Freiformfläche kann auch mit einem weiteren optischen Element kombiniert werden, insbesondere ebenfalls mit Freiformfläche oder auch mit einer Asphäre oder Zylinderlinse beziehungsweise einem entsprechend gekrümmten Spiegel. Eine spezielle Empfangs-optik, die als Konvex-konkaves Linsen- oder Spiegelsystem zwei Elemente mit jeweils mindestens einer Freiformoberfläche aufweist, kann wie in der noch unveröffentlichten Gebrauchsmusteranmeldung mit dem Aktenzeichen 20 2016 100 006.8. die Lichtfleckgeometrie auch bei Temperaturänderungen beibehalten. Als alternative zu einer Freiform kommen ein oder mehrere einfache optische Elemente in Betracht, etwa die Kombination einer Asphäre mit einer Zylinderlinse, aber damit kann der Lichtfleck nicht so gut angepasst werden. Auch der Einsatz eines diffraktiven optischen Elements anstelle der Freiform oder in Kombination mit einer Freiform ist denkbar. Erneut gelten entsprechende Ausführungen auch für eine Sendeoptik.

Die Steuer- und Auswertungseinheit ist bevorzugt für einen Einlernmodus ausgebildet, in dem der zu aktivierende Bereich des Lichtempfängers anhand der Position eines Lichtflecks eingelernt wird. Das kann schon in der Fertigung oder später im Feld geschehen. In der Fertigung beispielsweise können so Toleranzen durch die Entscheidung ausgeglichen werden, welche Lawinenphotodiodenelemente relevant sind und aktiv sein sollen. Im Feld kann die Auswahl des zu aktivierenden Bereichs Teil eines Kalibrier- oder Wartungsprozesses, aber auch einer dynamischen Anpassung während der Messung oder zwischen Messungen sein.

Dem Lichtempfänger ist bevorzugt ein Mikrolinsenfeld vorgeordnet. Dieses Mikrolinsenfeld weist nochmals bevorzugt eine Mikrolinse je Lawinenphotodiodenelement auf, wobei alternativ eine gruppenweise Zuordnung denkbar ist. Aufgrund der Mikrolinsen trifft das Empfangslicht ausschließlich oder wenigstens größtenteils die Lawinenphotodiodenelemente selbst, somit die lichtempfindlichen Bereiche des Lichtempfängers, anstelle der Zwischenbereiche beispielsweise mit Verbindungsleitungen oder Auswertungsstrukturen. Damit wird eine optische Empfindlichkeit wie bei einem Lichtempfänger mit höherem Füllfaktor im Idealfall von 100 % erreicht. Es ergibt sich eine erhöhte Bestrahlungsstärke der aktiven Lawinenphotodiodenelemente unter dem Lichtfleck und damit eine erhöhte Reichweite des Sensors. Das Mikrolinsenfeld ist besonders wirksam in Kombination mit einer Freiform.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung eines optoelektronischen Sensors;
- Fig. 2: ein vereinfachtes Ersatzschaltbild eines Lawinenphotodiodenelements im Geiger-Modus;
- Fig. 3a: eine schematische Darstellung eines Sensors und eines davon zu erfassenden Objekts zur Illustration einer Messwertverschiebung durch zusätzliche Reflexe;
- Fig. 3b: eine schematische Darstellung des Lichtempfängers und beispielhafter Lichtflecken in der Situation der Figur 3a;
- Fig. 4a: eine beispielhafte Darstellung eines runden Lichtflecks auf einer SPAD-Matrix;
- Fig. 4b: eine beispielhafte Darstellung eines langgestreckten Lichtflecks auf einer SPAD-Matrix;
- Fig. 5a: eine Schnittansicht einer Linse mit einer Freiform zur Erzeugung eines langgestreckten, homogenen Lichtflecks; und
- Fig. 5b: eine ergänzende Schnittansicht der Linse gemäß Figur 5a in einer dazu senkrechten Ansicht

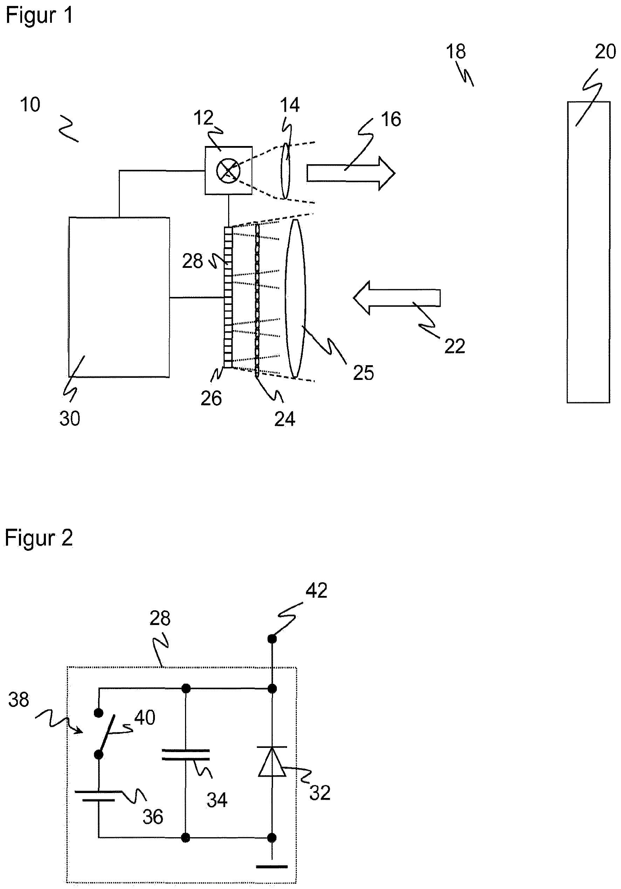

Figur 1 zeigt eine vereinfachte schematische Blockdarstellung eines optoelektronischen Sensors 10 in einer Ausführungsform als einstrahliger Lichttaster. Ein Lichtsender 12, beispielsweise eine LED oder eine Laserlichtquelle, sendet über eine Sendeoptik 14 ein Lichtsignal 16 in einen Überwachungsbereich 18 aus. Trifft es dort auf ein Objekt 20, so kehrt ein remittiertes oder reflektiertes Lichtsignal 22 über eine Empfangsoptik 24, 25 zu einem Lichtempfänger 26 zurück. Dieser Lichtempfänger 26 weist eine Vielzahl von Lichtempfangselementen auf, die als Lawinenphotodiodenelemente 28 im Geigermodus oder SPADs ausgebildet sind und die als Pixel aufgefasst werden können. Die Erfindung wird am Beispiel einer SPAD-Matrix beschrieben, ist aber prinzipiell auch anwendbar, wenn der Lichtempfänger eine Pixelstruktur von Lichtempfangselementen aufweist die keine SPADs sind. Die Empfangssignale der Lawinenphotodiodenelemente 28 werden von einer Steuer- und Auswertungseinheit 30 ausgelesen und dort ausgewertet.

Zumindest Teile der Steuer- und Auswertungseinheit 30 können auch mit den Lawinenphotodiodenelementen 28 auf einem gemeinsamen Chip integriert werden, dessen Fläche sich dann lichtempfindliche Bereiche der Lawinenphotodiodenelemente 28 und einzelnen oder Gruppen von Lawinenphotodiodenelemente 28 zugeordnete Schaltkreise zu deren Auswertung und Ansteuerung teilen. Weist die Empfangsoptik 24, 25 wie dargestellt ein Mikrolinsenfeld 24 auf, dann kann das Lichtsignal 22 gezielt jeweils auf die lichtempfindlichen Bereiche gebündelt werden. Die zusätzliche Linse 25 kann für eine Fokussierung und Formung des Empfangslichts sowie eine Lichtumverteilung sorgen. Das Mikrolinsenfeld 24 ist optional, und die Empfangsoptik 24, 25 kann insgesamt anders gestaltet sein als dargestellt, beispielsweise mit mehreren Linsen, reflexiv oder mit einem diffraktiven optischen Element.

Der Lichtempfänger 26 kann auch als digitale SPAD-Matrix bezeichnet werden. Das soll bedeuten, dass die Steuer- und Auswertungseinheit 30 Informationen einzelner Lawinenphotodiodenelemente 28 oder Gruppen davon erhält oder sogar in der Lage ist, diese gezielt an- und abzuschalten. Beides führt zu der Möglichkeit, Teilbereiche des Lichtempfängers 26 zu aktivieren.

Der Sensor 10 ist bevorzugt entfernungsmessend. Dazu bestimmt die Steuer- und Auswertungseinheit 30 eine Lichtlaufzeit von Aussenden des Lichtsignals 16 bis zum Empfang des zurückkehrenden Lichtsignals 22 und rechnet dies über die Lichtgeschwindigkeit in einen Abstand um. Mehrere Sensoren 10 können kombiniert werden, um ein tastendes Lichtgitter mit mehreren, meist parallelen Strahlen zu bilden, welches in jedem Strahl Entfernungen misst oder überwacht. Auch mobile Systeme sind denkbar, bei denen der Sensor 10 beweglich montiert ist, oder scannende Systeme, in denen das Lichtsignal 16, 22 über einen beweglichen Spiegel abgelenkt oder Lichtsender 12 beziehungsweise Lichtempfänger 26 selbst bewegt werden.

Die Anordnung des Sensors 10 in Figur 1 ist rein beispielhaft zu verstehen. Es sind alternativ andere bekannte optische Lösungen einsetzbar, wie Autokollimation etwa mit einem Strahlteiler und einer gemeinsamen Optik oder die Anordnung des Lichtsenders 12 vor dem Lichtempfänger 26.

Figur 2 zeigt ein beispielhaftes vereinfachtes Ersatzschaltbild einer einzelnen Lawinenphotodiode 28 im Geiger-Modus. In der Praxis handelt es sich um ein Halbleiterbauteil, dessen nicht dargestellter Aufbau hier als bekannt vorausgesetzt wird. Die Lawinenphotodiode 28 zeigt zum einen das Verhalten einer Diode 32. Sie hat eine Kapazität, die durch einen parallel geschalteten Kondensator 34 repräsentiert wird. Der mögliche Lawinendurchbruch erzeugt Ladungsträger, deren Ursprung in dem Ersatzschaltbild als Stromquelle 36 dargestellt wird. Der Lawinendurchbruch wird durch ein auftreffendes Photon 38 ausgelöst, wobei dieser Vorgang wie ein Schalter 40 wirkt. Es gibt dann verschiedene Möglichkeiten, das Ausgangssignal 42 zu betrachten, auf die hier nicht näher eingegangen wird.

Im Bereitschaftszustand liegt über der Diode 32 eine Spannung oberhalb der Durchbruchspannung an. Erzeugt dann ein einfallendes Photon 38 ein Ladungsträgerpaar, so schließt dies gleichsam den Schalter 40, so dass die Lawinenphotodiode 28 über die Stromquelle 36 mit Ladungsträgern geflutet wird. Neue Ladungsträger entstehen aber nur, solange das elektrische Feld stark genug bleibt. Wird durch die Stromquelle 36 der Kondensator 34 so weit entladen, dass die Durchbruchspannung unterschritten ist, so kommt die Lawine von selbst zum Erliegen ("passive quenching"). Danach lädt sich der Kondensator 34 wieder auf, bis wieder eine Spannung über der Durchbruchspannung an der Diode 32 anliegt. Es gibt alternative Ausgestaltungen, in denen die Lawine von außen erkannt und daraufhin eine Entladung unter die Durchbruchspannung ausgelöst wird ("active quenching").

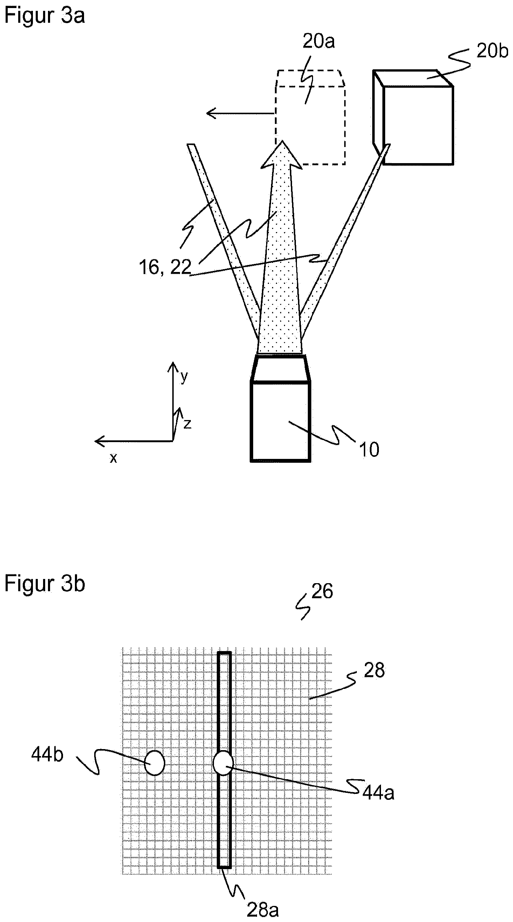

Figur 3a zeigt schematisch den Sensor 10 in einer typischen Anwendungssituation, in der wie durch den Pfeil angedeutet lateral bewegte Objekte 20a-b erfasst werden, wobei in diesem Beispiel ein Objekt 20a eine geringe Remission und ein Objekt 20b eine hohe Remission aufweist. Das in Figur 3a gezeigte Koordinatensystem wird auch im Folgenden zur Bezeichnung der x-, y-, und z-Richtung verwendet. Figur 3b zeigt Lichtflecke 44a-b, die durch die jeweils zurückkehrenden Lichtsignale 22 auf dem Lichtempfänger 26 erzeugt werden.

Dabei ergibt sich eine sogenannte laterale Schwarz-Weiß-Verschiebung. Damit bezeichnet man eine unerwünschte Abweichung des Schaltpunkts, an dem das Objekt erfasst wird, aufgrund der Objektremission. Der Grund für die Abweichung ist, dass es zusätzlich zu dem gewollten Lichtfleck 44a des in Schaltposition befindlichen Objekts 20a weitere Lichtflecke 44b geben kann. Dafür kommen verschiedene Ursachen in Betracht, wie Frontscheibenreflexionen, Reflexionen in einem Tubus des Lichtsenders 12 oder Beugungsstrukturen etwa einer Senderblende. Wenn ein solcher störender zusätzlicher Lichtfleck 44b ausreichend Signalanteile liefert, beispielsweise wegen seiner Ausdehnung oder weil die Remission des störenden Objekts 20b größer ist als diejenige des zu erfassenden Objekts 20a, kann dies zu verfrühtem Schalten führen. Die Objektposition der lateralen Bewegungsrichtung, an welcher der Sensor 10 schaltet, wird deshalb ungewollt abhängig von Störeffekten und insbesondere von der Remission der Objekte 20a-b.

Im Prinzip kann der Sichtbereich mit einer schmalen Blende etwa von < 200 µm Breite eingeschränkt und damit die laterale schwarz-weiß Verschiebung minimiert werden. Einerseits ist jedoch die mechanische Ausführung aufwändig und müsste justiert werden, und andererseits wäre das System im Betrieb kaum anpassbar. Deshalb wählt die Erfindung stattdessen den Weg, nur bestimmte Lawinenphotodiodenelemente 28a zu aktivieren, wie in Figur 3b durch ein Rechteck angedeutet. Dadurch kann Licht außerhalb des eigentlich zu erkennenden Bereichs ausgeblendet und die Schaltposition auch bei unterschiedlich remittierenden Objekten 20a-b konstant gehalten werden. Allerdings ist in Figur 3b der Lichtfleck 44a sehr schlecht an das Rechteck der aktivierten Lawinenphotodiodenelemente 28a angepasst, und das wird nun weiter verbessert.

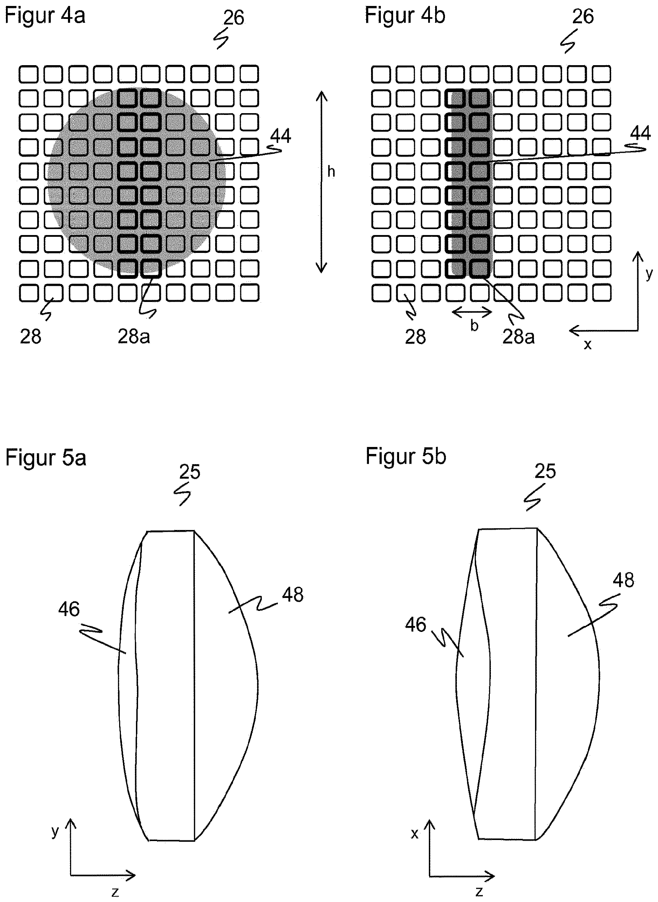

Figur 4a-b zeigen jeweils eine beispielhafte Darstellung des Lichtempfängers 26 mit dem Lichtfleck 44, den das zurückkehrende Lichtsignal 22 darauf erzeugt. Dabei sind auf dem Lichtempfänger 26 nur einige fett umrandete Lawinenphotodiodenelemente 28a in einer langgestreckten Rechteckanordnung von hier 2x8 Pixel aktiviert. In Figur 4a ist zum Vergleich ein kreisrunder und in Figur 4b ein langgestreckter, an die Anordnung der aktiven Lawinenphotodiodenelemente 28a angepasster Lichtfleck 44 mit jeweils gleicher vertikaler Ausdehnung dargestellt. Ein derartiger länglicher Lichtfleck 44 wird mittels der Empfangsoptik 24, 25, insbesondere der Linse 25 erzeugt, und kann durch Strahlformung in der Sendeoptik 14 oder einen länglichen Lichtsender 12 beispielsweise mit einer Linienanordnung von Lichtquellen unterstützt werden.

Der längliche Lichtfleck 44 gemäß Figur 4b weist ein Seitenverhältnis h/b von mindestens h/b=2:1 oder mehr, im Beispiel von 4:1 auf. Wie deutlich zu erkennen, ist dieser Lichtfleck wesentlich besser an die aktivierten Lawinenphotodioden 28a angepasst als der kreisrunde Lichtfleck 44 gemäß Figur 4a.

Zunächst sollte man annehmen, dass der Lichtfleck 44 und damit der Bereich der aktivierten Lawinenphotodioden 28a für einen genauen Schaltpunkt möglichst klein sein sollte. Um aber eine gewisse Signaldynamik zu gewährleisten und die einleitend beschriebenen Effekte der Fehlauslösung und Totzeit von SPADs auszugleichen, muss eine Mindestanzahl an einzelnen Lawinenphotodiodenelementen 28 aktiviert und von dem Lichtfleck 44 ausgeleuchtet werden. Beispielsweise wenn es wie in Figur 3 nur auf eine laterale Position ankommt, können hierfür n>1 Lawinenphotodiodenelemente 28a in der zur Bewegungsrichtung x senkrechten Richtung y verwendet werden.

Der auf diesen Bereich der aktivierten Lawinenphotodiodenelemente 28a angepasste langgestreckte, bevorzugt rechteckige Lichtfleck 44 bringt im Zusammenhang mit dem als digitale Matrix ausgebildeten Lichtempfänger 26 wesentliche Vorteile, da hiermit das gesamte Signallicht in den relevanten Bereich des Lichtempfängers 26 projiziert wird.

Als Zahlenbeispiel wird eine SPAD-Matrix mit einem Raster von 20 µm und einzelnen Lawinenphotodiodenelementen oder SPADs der Größe 15 µm x 15 µm betrachtet. Für die hierfür vereinfachend angenommene einzelne Linse der Empfangsoptik 24, die nicht als Mikrolinsenarray ausgebildet ist, wird eine Brennweite von 10 mm in der xz-Ebene angenommen. Bei Verwendung eines Bereichs mit aktivierten Lawinenphotodiodenelementen 28a von 1 x n ist der Empfangswinkel in der xz-Ebene ca. ±0.05°. Dann ist bei einer Distanz von 1 m der Sichtbereich 1.5 mm breit. Ein in x-Richtung querendes und zu detektierendes Objekt 20 wird dadurch punktgenau erfasst. Der Schaltpunkt in x-Richtung ist damit nahezu unabhängig von der Remission des Objekts. Durch Verwendung einer anderen Brennweite der Empfangsoptik 24 oder einer anderen Anzahl aktivierter Lawinenphotodiodenelemente 28a in x-Richtung kann dieser Empfangswinkel verändert werden.

Vergleicht man nun die Bestrahlungsstärke eines kreisrunden Lichtflecks 44, welcher in x- und γ-Richtung jeweils n Lawinenphotodiodenelemente 28, 28a abdeckt, mit einem rechteckigen Lichtfleck 44, der ebenfalls in γ-Richtung n, in x-Richtung jedoch nur wenige Lawinenphotodiodenelemente 28a abdeckt, dann ergibt sich eine erhebliche Erhöhung der Bestrahlungsstärke für den rechteckigen Lichtfleck. Im Beispiel der Figur 4 trifft der kreisrunde Lichtfleck 44 insgesamt 51 und damit gut dreimal so viele Lawinenphotodiodenelemente 28a-b wie der angepasste rechteckige Lichtfleck 44. Der Gewinn an Bestrahlungsstärke wird bei stärkerer Längserstreckung, etwa einer Breite von nur einem Lawinenphotodiodenelement 28a beziehungsweise einer größeren Ausdehnung in γ-Richtung, noch größer und nimmt bei kleinerem Seitenverhältnis ab, verschwindet aber nicht, solange der Lichtfleck 44 langgestreckt bleibt.

Ein Effekt der deutlich erhöhten Bestrahlungsstärke und damit des verbesserten Nutzsignals ist eine größere Reichweite des Sensors 10. Die Vermeidung einer Schaltpunktverschiebung wurde schon im Zusammenhang mit Figur 3 erläutert. Ein weiterer Vorteil ist die bessere Fremdlichtverträglichkeit. Fällt nämlich Fremdlicht nichtparallel zur yz-Ebene auf die Empfangsoptik 24, so wird vornehmlich ein Bereich außerhalb der aktivierten Lawinenphotodiodenelemente 28a beleuchtet, und solches Fremdlicht wird nicht detektiert. Dabei kann der jeweilige Sichtbereich der aktivierten Lawinenphotodiodenelemente 28a variabel eingestellt werden.

Eine zusätzliche Homogenisierung der Bestrahlungsstärke innerhalb des Lichtflecks 44 kann beispielsweise durch geeignete Auslegung der Empfangsoptik 24, 25 und insbesondere der Linse 25, alternativ oder unterstützend der Sendeoptik 14 ebenfalls erreicht werden und bringt weitere wesentliche Vorteile mit sich. Wegen der Totzeit von SPADs nach einem Empfangsereignis erhöht eine homogene Bestrahlungsstärke innerhalb des Lichtflecks 44 die Gesamtanzahl detektierter Photonen im Vergleich zu einer inhomogenen Bestrahlungsverteilung, wie sie bei Empfangslinsen mit Asphärenoberflächen auftreten würde. Auch dadurch erhöhen sich das Empfangssignal und damit die Reichweite des Sensors 10. Ein weiterer Vorteil einer homogenen Beleuchtung ist die Minimierung der Varianz in der Ankunftszeit des ersten Signalphotons auf einem jeweiligen Lawinenphotodiodenelement 28, 28a in einem entfernungsmessenden System, das deshalb den Objektabstand genauer bestimmt.

Figur 5 zeigt eine Linse mit einer Freiform, die als Linse 25 der Empfangsoptik 24, 25 zur Erzeugung eines langgestreckten, homogenen Lichtflecks 44 verwendet werden kann. Dabei ist Figur 5a ein Schnitt in der yz-Ebene und Figur 5b in der dazu senkrechten xz-Ebene. Eine Fläche 46 dieser Linse ist eine Freiformfläche, die zweite Fläche 48 eine Asphäre. Erzielt wird mit der dargestellten Geometrie ein rechteckiger Lichtfleck 44 mit einer Ausdehnung von 30 µm x 250 µm (b x h).

Eine derartige Freiformlinse oder ein ebenso verwendbarer Freiformspiegel in einer reflexiven Anordnung ist besonders genau an die jeweiligen Anforderungen anpassbar, denn der Lichtfleck 44 kann ganz gezielt geformt und zugleich die Intensitätsverteilung innerhalb des Lichtflecks 44 gewählt werden. Beispiele für Freiformen sind polynomiale Flächendarstellungen, endliche Summen mit Basisfunktionen, wie Zernike-Polynome oder Legendre-Polynome, oder NURBS-Flächen (Nicht Uniforme Rationale B-Splines). Die konkrete Freiformgeometrie erhält man beispielsweise durch Simulation in einem Optikprogramm oder durch explizite Berechnung wie das sogenannte Tailoring von optischen Flächen, welches auf der Lösung von Monge-Ampere-Differentialgleichungen beruht. Figur 5 gibt ein Beispiel, aber die tatsächlich am besten passende Freiform hängt von zahlreichen Faktoren wie dem Sensor 10, dessen Abmessungen und internem Aufbau sowie der konkreten Detektionsanwendung ab.

## Patentansprüche

1. Entfernungsmessender optoelektronischer Sensor (10) zur Erfassung eines Objekts (20) in einem Überwachungsbereich (18) mit einem Lichtsender (12) zum Aussenden eines Lichtsignals (16) in den Überwachungsbereich (18) und mit einem Lichtempfänger (26), der eine Empfangsoptik (25) und eine Vielzahl von Lawinenphotodiodenelementen (28) zur Erfassung von Empfangslicht aus dem Überwachungsbereich (18) aufweist, die jeweils mit einer Vorspannung oberhalb einer Durchbruchspannung vorgespannt und somit in einem Geiger-Modus betrieben sind, wobei der Lichtempfänger (26) digital ausgebildet ist und somit ermöglicht, einzelne oder Gruppen von Lawinenphotodiodenelementen (28, 28a) zu aktivieren oder zu deaktivieren, und mit einer Steuer- und Auswerteeinheit (30), die zur Auswertung eines Empfangssignals des Lichtempfängers (26) ausgebildet ist, um aus einer Lichtlaufzeit zwischen Aussenden des Lichtsignals (16) und Empfangen des an dem Objekt (20) remittierten oder reflektierten Lichtsignals (22) einen Abstand des Objekts (20) zu bestimmen sowie diejenigen Lawinenphotodiodenelemente (28a) zu aktivieren, wo ein Lichtfleck (44) des an dem Objekt (20) remittierten oder reflektieren Lichtsignals (22) erwartet ist,
**dadurch gekennzeichnet,**
**dass** die Empfangsoptik (25) durch Anpassung der Geometrie des Lichtflecks (44) eine langgestreckte Form des Lichtflecks (44) erzeugt.

2. Sensor (10) nach Anspruch 1,
wobei der Lichtfleck (44) ein Seitenverhältnis von mindestens 2:1 aufweist.

3. Sensor (10) nach Anspruch 1 oder 2,
wobei der Lichtfleck (44) eine rechteckige Form aufweist.

4. Sensor (10) nach einem der vorhergehenden Ansprüche,
wobei die Empfangsoptik (25) den Lichtfleck (44) homogenisiert.

5. Sensor (10) nach einem der vorhergehenden Ansprüche,
wobei die Empfangsoptik (25) mindestens eine Freiformfläche (46) aufweist.

6. Sensor (10) nach einem der vorhergehenden Ansprüche,
wobei die Steuer- und Auswertungseinheit (30) für einen Einlernmodus ausgebildet ist, in dem der zu aktivierende Bereich des Lichtempfängers (26) anhand der Position eines Lichtflecks (44) eingelernt wird.

7. Sensor (10) nach einem der vorhergehenden Ansprüche,
wobei dem Lichtempfänger (26) ein Mikrolinsenfeld (24) vorgeordnet ist.

8. Verfahren zur Entfernungsmessung eines Objekts (20) in einem Überwachungsbereich (18), bei dem ein Lichtsignal (16) in den Überwachungsbereich (18) ausgesandt wird und mit einem digitalen Lichtempfänger (26), der eine Vielzahl von Lawinenphotodiodenelementen (28) aufweist, die jeweils mit einer Vorspannung oberhalb einer Durchbruchspannung vorgespannt und somit in einem Geiger-Modus betrieben sind, durch eine Empfangsoptik (25) ein Lichtfleck (44) detektiert wird, der auf dem Lichtempfänger (26) von dem an dem Objekt (20) reflektierten oder remittierten Lichtsignal (22) erzeugt wird, wobei nur diejenigen Lawinenphotodiodenelemente (28a) aktiviert sind, wo der Lichtfleck (44) erwartet wird, und wobei aus einer Lichtlaufzeit zwischen Aussenden des Lichtsignals (16) und Empfangen des an dem Objekt (20) remittierten oder reflektierten Lichtsignals (22) ein Abstand des Objekts (20) bestimmt wird, **dadurch gekennzeichnet,**
**dass** die Empfangsoptik (25) durch Anpassung der Geometrie des Lichtflecks (44) eine langgestreckte Form des Lichtflecks (44) erzeugt.

## Claims

1. An optoelectronic sensor (10) for detecting an object (20) in a monitoring region (18), the sensor (10) having a light transmitter (12) for transmitting a light signal (16) into the monitoring region (18) and a light receiver (26) comprising receiving optics (25) and a plurality of avalanche photodiode elements (28) for detecting received light from the monitoring region (18), which are each biased with a bias voltage above a breakdown voltage and are thus operated in a Geiger mode, the light receiver (26) being of digital design and thus enabling to activate or deactivate individual or groups of avalanche photodiode elements (28, 28a), and having a control and evaluation unit (30) which is configured to evaluate a reception signal of the light receiver (26) for determining a distance of the object (20) from a light transit time between transmission of the light signal (16) and reception of the remitted light signal (22) remitted or reflected at the object (20) as well as for activating those avalanche photodiode elements (28a) where a light spot (44) of the remitted light signal (22) remitted or reflected at the object (20) is expected,
**characterized in that** the receiving optics (25), by adapting the geometry of the light spot (44), generate an elongated shape of the light spot (44).

2. The sensor (10) according to claim 1,
wherein the light spot (44) has an aspect ratio of at least 2:1.

3. The sensor (10) according to claim 1 or 2,
wherein the light spot (44) has a rectangular shape.

4. The sensor (10) according to one of the preceding claims,
wherein the receiving optics (25) homogenize the light spot (44).

5. The sensor (10) according to one of the preceding claims
wherein the receiving optics (25) comprise at least one free-form surface (46).

6. The sensor (10) according to one of the preceding claims,
wherein the control and evaluation unit (30) is configured for a teach-in mode in which the region of the light receiver (26) to be activated is taught-in on the basis of the position of a light spot (44).

7. The sensor (10) according to one of the preceding claims,
wherein a microlens field (24) is arranged in front of the light receiver (26).

8. A method for measuring the distance of an object (20) in a monitoring region (18), wherein a light signal (16) is transmitted into the monitoring region (18) and a light spot (44) is detected through receiving optics (25) with a digital light receiver (26) which has a plurality of avalanche photodiode elements (28) which are each biased with a bias voltage above a breakdown voltage and are thus operated in a Geiger mode, the light spot (44) being generated on the light receiver (26) by a remitted light signal (22) reflected or remitted at the object (20), wherein only those avalanche photodiode elements (28a) are activated where the light spot (44) is expected, and wherein a distance between the object (20) and the remitted light signal (22) remitted or reflected at the object (20) is determined from a light transit time between transmission of the light signal (16) and reception of the remitted light signal (22) remitted or reflected at the object (20),
**characterized in that** the receiving optics (25), by adapting the geometry of the light spot (44), generate an elongated shape of the light spot (44).

## Revendications

1. Capteur télémétrique optoélectronique (10) pour la détection d'un objet (20) dans une zone à surveiller (18), comportant un émetteur de lumière (12) pour émettre un signal lumineux (16) dans la zone à surveiller (18) et un récepteur de lumière (26) qui comprend une optique de réception (25) et une multitude d'éléments formant photodiodes à avalanche (28) pour la détection de la lumière de réception depuis la zone à surveiller (18), qui sont chacun polarisés avec une tension de polarisation supérieure à une tension de claquage et qui fonctionnent donc en mode Geiger, le récepteur de lumière (26) étant réalisé de façon numérique et permettant donc d'activer ou de désactiver des éléments formant photodiodes à avalanche (28, 28a) individuels ou en groupes, et comportant une unité de commande et d'évaluation (30) réalisée pour évaluer un signal de réception du récepteur de lumière (26), afin de déterminer, à partir d'un temps de vol de lumière entre l'émission du signal lumineux (16) et la réception du signal lumineux (22) réémis ou réfléchi sur l'objet (20), une distance de l'objet (20), et d'activer ceux des éléments formant photodiodes à avalanche (28, 28a) où une tache de lumière (44) du signal lumineux (22) réémis ou réfléchi sur l'objet (20) est attendue,
**caractérisé en ce que**
l'optique de réception (25), en adaptant la géométrie de la tache de lumière (44), génère une forme allongée de la tache de lumière (44).

2. Capteur (10) selon la revendication 1,
dans lequel la tache de lumière (44) présente un rapport d'aspect d'au moins 2:1.

3. Capteur (10) selon la revendication 1 ou 2,
dans lequel la tache de lumière (44) présente une forme rectangulaire.

4. Capteur (10) selon l'une des revendications précédentes,
dans lequel l'optique de réception (25) homogénéise la tache de lumière (44).

5. Capteur (10) selon l'une des revendications précédentes,
dans lequel l'optique de réception (25) présente au moins une surface de forme libre (46).

6. Capteur (10) selon l'une des revendications précédentes,
dans lequel l'unité de commande et d'évaluation (30) est réalisée pour un mode d'apprentissage dans lequel la zone à activer du récepteur de lumière (26) est apprise à l'aide de la position d'une tache de lumière (44).

7. Capteur (10) selon l'une des revendications précédentes,
dans lequel un réseau de microlentilles (24) est agencé en amont du récepteur de lumière (26).

8. Procédé de mesure de distance d'un objet (20) dans une zone à surveiller (18), dans lequel un signal lumineux (16) est émis dans la zone à surveiller (18), et une tache lumineuse (44) qui est générée sur un récepteur de lumière (26) par le signal lumineux réfléchi ou réémis sur l'objet (20) est détectée par une optique de réception (25) au moyen du récepteur de lumière numérique (26) qui comprend une multitude d'éléments formant photodiodes à avalanche (28) qui sont polarisés chacun avec une tension de polarisation supérieure à une tension de claquage et qui fonctionnent donc en mode Geiger, uniquement ceux des éléments formant photodiodes à avalanche (28a) sont activés où la tache de lumière (44) est attendue, et
à partir d'un temps de vol de lumière entre l'émission du signal lumineux (16) et la réception du signal lumineux (22) réémis ou réfléchi sur l'objet (20), une distance de l'objet (20) est déterminée,
**caractérisé en ce que**
l'optique de réception (25), en adaptant la géométrie de la tache de lumière (44), génère une forme allongée de la tache de lumière (44).
